# EUROPEAN PATENT SPECIFICATION

(11) **EP 3 858 143 B1**
(45) Date of publication and mention of the grant of the patent: **20.08.2025**
(21) Application number: 20154256.0
(22) Date of filing: 29.01.2020
(51) Int. Cl.: A22C 15/00

(54) **TRANSFER DEVICE WITH A BUFFER FOR ROD-LIKE ELEMENTS AND METHOD FOR CONTROLLING THE TRANSFER DEVICE**
TRANSFERVORRICHTUNG MIT EINEM PUFFER FÜR STABFÖRMIGE ELEMENTE UND VERFAHREN ZUR STEUERUNG DER TRANSFERVORRICHTUNG
DISPOSITIF DE TRANSFERT COMPORTANT UN TAMPON POUR ÉLÉMENTS EN FORME DE TIGE ET PROCÉDÉ POUR COMMANDER LE DISPOSITIF DE TRANSFERT

(43) Date of publication of application: 04.08.2021
(73) Proprietor: Poly-clip System GmbH & Co. KG, 65795 Hattersheim (DE)
(72) Inventor: Scheding, Markus, 65239 Hochheim (DE)
(74) Representative: Eisenführ Speiser

(56) References cited:
- EP-A1- 2 384 638
- CN-A- 109 042 806
- IT-A1- BO20 130 324
- US-A- 5 082 419

## Description

The invention relates to a transfer device for transferring rod-like elements used for temporarily storing sausage-shaped products, in particular sausages, in a transfer direction from a first transfer point to a second transfer point. Moreover, the present invention is directed to a method for transferring rod-like elements used for temporarily storing sausage-shaped products, in particular sausages, in a transfer device comprising a first transfer point, a second transfer point, a buffering region located between the first transfer point and the second transfer point, and at least one gripping unit for transferring a rod-like element in a transfer direction from the first transfer point to the buffering region and/or the second transfer point.

In an already known production line for producing sausage-shaped products, like sausages, a filling tube is provided for feeding a packaging material or tubular casing, respectively, with, for example, sausage meat, wherein the tubular casing is closed at one end facing in the filling direction by a first clip. After the filling operation is concluded, the tube-like casing is finally closed by a second clip. If the sausage is later to be hung up on a smoking rod formed by a rod-like or rod-shaped element, for example for the purposes of smoking or storage, a suspension loop is fed thereto in such a way that, when the first or second clip is attached, it is embraced by the respective clip and is thus secured to the sausage.

After the filling process, the sausages can be subjected to further processing, for example in a smoking chamber. For that purpose, the sausages have to be transported to the end of the conveyor and there taken over by an automatic hanging line, in which the sausages are hung up on a rod-like element, such as a smoking rod, at their loops one after another in such a way that, as far as possible, they do not touch each other. Afterwards, the smoking rods are transported to a further storage frame which has rollers for transporting the smoking rods into a smoking chamber. A robotic device may be provided for removing the smoking rods discharged one after the other from the automatic hanging line and inserting said smoking rods into the storage frame.

From EP patent application 2 384 638, a system for producing and handling sausage-like products is known. The system includes a production line for producing sausage-like products and for storing them on rod-like elements, a control unit for controlling the production line, a robotic device and a storage frame into which the sausage-like products hung up at the rod-like elements are to be moved by the robotic device. The system further includes an automatic hanging line, where the sausage-like products are placed in regular intervals at a rod-like element, and a release line for transferring the rod-like elements from a first transfer point close to the hanging line to a second transfer point where the rod-like elements are removed from the release signalled by the robotic device. A further system for producing and handling sausage-like products is known from Chinese patent application CN 109042806 A.

For an efficient operation of the hanging line and the robotic device, it is advantageous that the production of the sausages, and thus, the operation of the hanging line is coordinated with the provision of a storage frame to be filled, and the operation of the robotic device accordingly. In the case of interruptions of the production process, e.g. during refilling casing material or suspension loops, a continuous discharge of smoking rods from the hanging line is not possible, whereby also the robotic device has to be stopped. Moreover, during removing a storage frame filled with smoking rods and positioning an empty storage frame to be filled, the continuous discharge of smoking rods from the hanging line has to be stopped, since the robotic device, in this time, may not remove a smoking rod from the hanging line and insert said smoking rod into a storage frame.

Thus, it is an object of the present invention to overcome the above-mentioned disadvantages and to increase the efficiency of a production line for producing sausage-shaped products and the further treatment of the sausage-shaped products.

According to the present invention, there is provided a transfer device for transferring rod-like or rod-shaped elements for storing sausage-shaped products, in particular sausages, in a transfer direction from a first transfer point to a second transfer point. The transfer device comprises a first guidance and a second guidance spaced apart and extending at least substantially parallel to each other, each having a first end and a second end, wherein, in the area of the first end of the guidances, the first transfer point is defined and, in the area of the second end of the guidances, the second transfer point is defined. In the inventive transfer device, a buffering region is provided between the first transfer point and the second transfer point of the guidances for temporarily buffering at least one rod-like element after being removed from the first transfer point. The buffering region includes several predetermined buffering positions. Furthermore, at least one, preferably a pair of gripping units is provided with the gripping unit being linearly movable along at least one of the guidances, for transferring a rod-like element along said guidance from the first transfer point to the buffering region and/or to the second transfer point. Moreover, a control unit is provided being configured to control the at least one gripping unit, and being adapted to move the at least one gripping unit in specific movement pattern for moving the rod-like elements positioned in the buffering region towards the second transfer point according to said specific pattern.

Providing a buffering region between the first and second transfer points for temporarily buffering at least one rod-like element after its removal from the first transfer point, enables a more flexible handling of the rod-like element positioned in the first transfer point as well as that positioned in the second transfer point. In particular, if there is a jamming at the second transfer point, feeding of rod-like elements to the first transfer point must not be interrupted. Moreover, different operating speeds of the devices being arranged in front of the first transfer point and behind the second transfer point can be balanced.

The provision of several predefined buffering positions allows an exact positioning of the rod-like elements to be treated, and thus, a reliable handling of said rod-like elements. Said gripping units allow a defined movement of the rod-like elements along the guidances.

For a further reliable handling of the rod-like elements, and for reducing the control amount, it is further preferred that the several predetermined buffering positions are arranged at substantially equal distances from each other in the transfer direction.

It has to be understood that said predetermined buffering positions may be arranged at equal distances from each other at any time. However, said equal distances may vary, e.g. dependent on the size of the sausage-shaped products, particularly on their diameter, such that said equal distances may be reduced in the case that the diameter of the sausage-shaped products is small, and that said equal distances may be enlarged corresponding to the enlarged diameter of the sausage-shaped products to be produced.

The buffering positions in the buffering region may be arranged subsequently in regular intervals. Alternatively, it is also possible that the distances between the buffering positions are not regular. The buffering positions may be arranged in groups, e.g. with the buffering positions in each group in equal distances, but with a different distance between the groups.

Naturally, it is also possible that the distances between the buffering positions of the rod-like elements in the buffering region may be varied. This option may be selected for an optimized transfer process, or in an accident case, in which a rod-like element different from the rod-like element actually be handled, has to be positioned in the second transfer point, e.g. for securing a continuous handling process. In such a case, the rod-like element actually handled by the gripping unit, may immediately be placed in the current position of the gripping unit, this position is registered, e.g. in the control unit, for a further transfer of this particular rod-like element at a later point of time.

For optimizing the transfer process, and particularly for shorten the transfer time of a rod-like element to the second transfer point, it is of advantage that the at least one predetermined buffering position is located closer to the second transfer point than to the first transfer point with respect to the transfer direction. In case that there are several predetermined buffering positions, these buffering positions or at least some of these buffering positions are arranged closer to the second transfer position.

In a preferred embodiment of the inventive transfer device, the at least one predetermined buffering position is formed by at least one first depression in the upper surface of the first guidance, and preferably a corresponding second depression is provided on the upper surface of the second guidance.

The rod-like element positioned in said buffering positon is secured in this position by said first depression, and is prevented from unintentionally being removed from this position. The provision of a second depression is not necessary, since the first depression can already secure the rod-like element in this position. However, a second depression, e.g. dependent on the size of the rod-like element or the size and number of sausage-shaped products stored thereon, may improve the positioning of the rod-like element and reduce the danger of being unintentionally removed from this position.

For further securing the rod-like element in the buffering position, in a further preferred embodiment of the inventive transfer device, the depression has a cross-sectional shape corresponding to the cross-sectional shape of the rod-like elements used.

According to the present invention, it is of advantage that each of the guidances includes a bar extending along the upper surface of the guidances and wherein preferably the bar includes the at least one depression. Said bar constitutes the surface on which the rod-like elements are moved from the first transfer point towards the second transfer point. This specific design allows to exchange the bars on the guidances, e.g. in adaption to the cross-sectional shape and/or the kind of material of the rod-like elements used, or in case of mechanical abrasion.

Alternatively to the provision of depressions for defining buffering positions, said buffering positions may be "virtual" positions, defined by physical elements detectable by corresponding sensors. Said "virtual" buffering positions may also be defined by their distances to a reference point, like the first, second or third transfer point, and a respective distance to each other. In such a case, the gripping units may be provided with respective sensors for detecting the position defining elements or for detecting a predefined distance.

Further alternatively, or additionally, the gripping units may be provided with optical sensors or cameras, which may detect a rod-like element positioned in the buffering region, together with its position relative to one of the first, second or third transfer point or to other rod-like elements in the buffering region. Based thereon, the control unit may control the gripping units for an optimized transfer of the rod-like elements.

Each of the gripping units has an engaging part for engaging one of the first end and second ends of the rod-like elements. This engaging part may further be designed as a replacement part, for adapting the gripping unit to the rod-like elements used, particularly to its cross-sectional shape.

In the inventive transfer device, it is of advantage that a control unit is provided, with the control unit being configured to control the at least one gripping unit such that a rod-shaped element located in the first transfer point is removed from the first transfer point before rod-shaped elements located in the buffering region are moved by the at least one gripping unit. Thereby, it is enabled that the transfer device is prepared for receiving a further rod-like element to be handled at the first transfer point.

In the inventive transfer device, it is further of advantage that a control unit is provided, with the control unit being configured to control the at least one gripping unit such that a rod-shaped element located in preferably the foremost predetermined buffering position of the buffering region, referred to the transfer direction, is transferred to the second transfer point before other rod-shaped elements located in the buffering region are moved by the at least one gripping unit. This ensures that at each time, a rod-like element is positioned in the second transfer point, which may be removed from the inventive transfer device by a further handling device, like automatically by a robotic device or manually by an operator.

According to the present invention, there is further provided a method for transferring rod-like elements for storing sausage-shaped products, in particular sausages, in a transfer device comprising a first transfer point, a second transfer point, a buffering region located between the first transfer point and the second transfer point, the buffering region including several predetermined buffering positions, at least one gripping unit for transferring a rod-like element in a transfer direction from the first transfer point to the buffering region and/or the second transfer point, and a control unit for controlling the at least one gripping unit, comprising the steps of: picking-up a rod-shaped element at the first transfer point by the gripping unit and transferring said rod-like element to the second transfer point if there is no rod-like element at the second transfer point, or moving the rod-shaped element to the buffering region if there is a rod-like element at the second transfer point, moving the gripping unit in specific movement pattern, and moving the rod-like elements positioned in the buffering region towards the second transfer point according to said specific pattern. Thereby, a continuous operation of the transfer device is ensured.

It has to be understood that a direct transfer of a rod-like element from the first transfer point to the second transfer point is only possible if there is no further rod-like element in the buffering region. Otherwise, the rod-like element picked-up in the first transfer point by the gripping unit, is transferred to the first free buffering position or one of the free buffering positions reached after leaving the first transfer point.

In the case that the buffering region has a plurality of predetermined buffering positions arranged in series and spaced apart in the transfer direction, the inventive method further comprises the step of moving a rod-shaped element picked-up at the first transfer point into the foremost free predetermined buffering position with respect to the transfer direction. The provision of a plurality of buffering positions increases the flexibility of the transfer device, and further ensures a continuous operation, e.g. also in case of irregularities in the production process.

In case that the buffering region has a plurality of predetermined buffering positions arranged in series and spaced apart in the transfer direction, the inventive method may further comprise the step of placing several rod-shaped elements in the predetermined buffering positions of the buffering region in such a way that the foremost predetermined buffering position, referred to the transfer direction, is occupied first by a rod-shaped element and subsequently the predetermined buffering positions upstream the foremost buffering position, referred to the transfer direction, are successively occupied by rod-shaped elements in the transfer direction. Thereby, the efficiency and reliability of the transfer device is increased.

In this case, the inventive method may also comprise the step of removing a rod-shaped element from the first transfer point before moving one of the rod-shaped elements located in the buffering region. This ensures, that the first transfer point is ready to receive a further rod-shaped element, at the earliest possible time point.

Furthermore, the method may comprise the step of transferring a rod-shaped element from the buffering region to the second transfer point before moving rod-shaped elements located in the buffering region. That means, providing a rod-like element in the second transfer point is prioritised, such that a continuous removal of rod-shaped elements from the transfer device is guaranteed.

The inventive method for transferring rod-like elements thereby provides all advantages explained in conjunction with the inventive transfer device for transferring rod-like elements.

In the following, further advantages and embodiments of the inventive methods and/or the inventive devices are described in conjunction with the attached drawings. Thereby, the expressions "left", "right", "below" and "above" are referred to the drawings in an orientation of the drawings which allows the normal reading of the reference numbers.

In the drawings:
- Fig. 1:: is a schematically view of a system for handling rod-like elements with sausage-shaped products including a transfer device according to the present invention,
- Fig. 2:: is a perspective view to the rear side of a transfer device according to the present invention, and
- Fig. 3:: is a perspective view to the front side of the transfer device of Fig. 2.

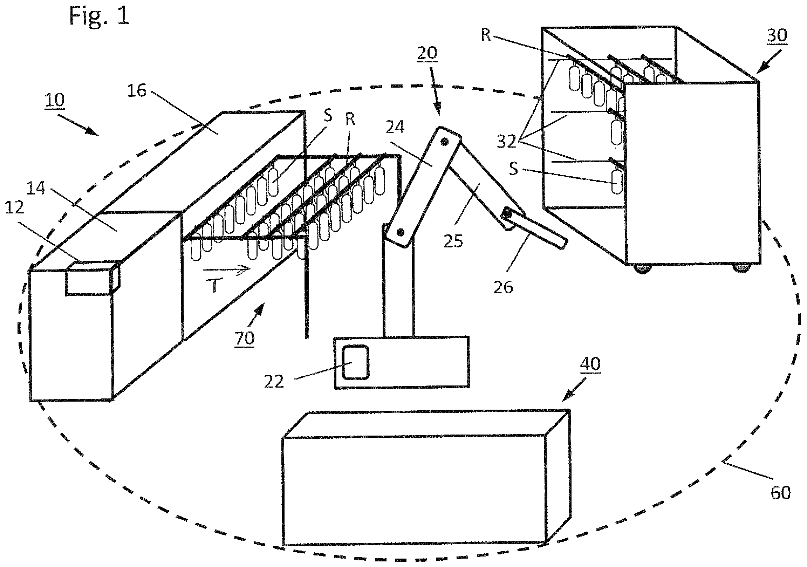

The system for handling rod-like elements R according to Fig. 1 comprises as main components a schematically shown production line 10 for producing sausage-shaped products S, like sausages, and storing them on rod-like elements R, like smoking rods, including a control unit 12 for controlling the production line 10, a robotic device 20 having a control unit 22 for controlling the movement of robotic device 20, and a storage frame 30, into which the sausages S hung up at the rod-like elements R are to be moved.

As shown in Fig. 1, the system for producing and handling sausage-shaped products S further comprises a treatment station 40, in which any possible treatment to the sausages S can be executed before they are stored in storage frame 30. A possible treatment may be splashing the sausage-shaped products S with a smoking fluid or a flavoring fluid. Alternatively, additional treatment stations may belong to the system. If no treatment is necessary to the sausage-shaped products S between production and storage in storage frame 30, no treatment station needs to be integrated into the system.

Storage frame 30 is positioned in an operating range 60 of robotic device 20 which is illustrated by broken lined circle 60. Inside storage frame 30, tray rails or shelf rails 32 e.g. in the form of horizontally aligned bars are arranged for positioning rod-like elements R thereon.

Robotic device 20, which may be a so called joined-arm robot, is positioned in the center of its operating range 60 to reach all units 10, 30, 40 and stations peripherally arranged inside operating range 60 by its pivotally attached arms 24, 25. At front end of arm 25, a gripping unit 26 is arranged for gripping the smoking rods R with the sausages S hanging thereon inside production line 10 and moving it to storage frame 30. Control unit 22 for controlling the movement of robotic device 20 is accommodated in the housing of robotic device 20.

Production line 10 for producing sausages S comprises a sausage production device 14, like a clipping machine, and an automatic hanging line 16. At least automatic hanging line 16 is peripherally arranged inside operating range 60. In production line 10 sausage-shaped S are produced in a known manner by filling e.g. sausage meat through a filling pipe into a tubular casing and closing the casing by said clipping machine attaching and closing clips at both ends. A flexible suspension loop is fed to one of the closing clips to be attached together with said clip to the respective end of the sausages S. Thereafter, sausages S will be placed in regular intervals at rod-like element R in automatic hanging line 16.

The system for handling rod-like elements or smoking rods R further includes a transfer device 70. Transfer device 70 is connected with its rear side to production line 10 for receiving rod-like elements R with sausage-shaped products S thereon when discharged from hanging line 16. On transfer device 70, the rod-like elements R are moved away from hanging line 16 towards the front end of transfer device 70 in a transfer direction T.

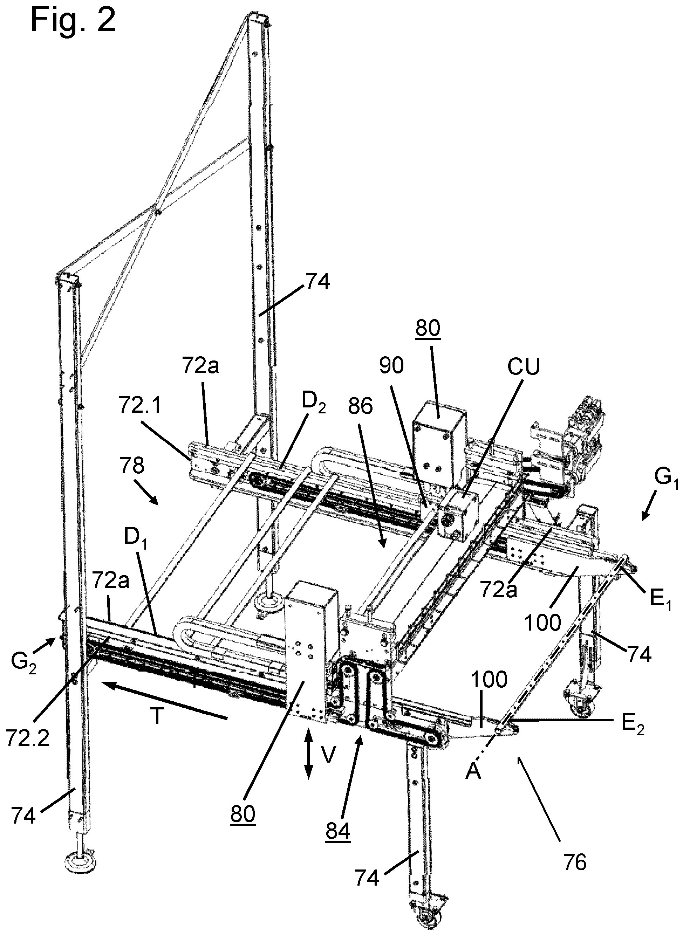

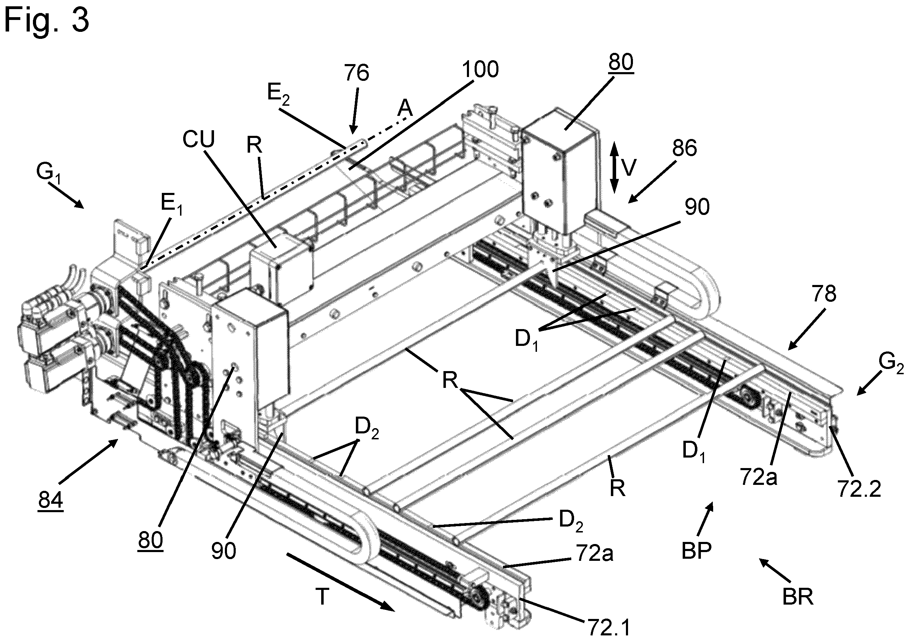

As can be seen in Figs. 2 and 3, transfer device 70 comprises two guidances 72.1, 72.2. The at least approximately horizontally arranged guidances 72.1, 72.2 are straight, spaced apart to each other and extend at least substantially parallel to each other. Each guidance 72.1, 72.2 is supported on posts 74 arranged on each end G₁, G₂ of the guidances 72.1, 72.2. Rod-like elements R have a central axis A, first end E₁ and a second end E₂. First and second ends E₁, E₂ of rod-like elements R are supported by guidances 72.1, 72.2.

Posts 74 may be of equal length. However, in Fig. 2, posts 74 supporting the front end of guidances 72.1, 72.2 exceed guidances 72.1, 72.2. Posts 74 may be used for mounting security devices thereon, like protecting grids. Guidances 72.1, 72.2 may height-adjustably be supported by columns 74, for adjusting transfer device 70 to production line 10. In Fig. 3, posts 74 have been omitted for clarity reasons. However, they are present for supporting guidances 72.1, 72.2.

The area of the first end G₁ of each guidance 72.1, 72.2 extends into production line 10 such that a rod-like element R can be transferred to the guidances 72.1, 72.2. The area of the first end G₁ of the guidances 72.1, 72.2 defines a first transfer point 76 between production line 10 and transfer device 70. Rod-like element R is moved from the first transfer point 76 to the area of the second end G₂ in transfer direction T, in which the rod-like element R is transferred to robotic device 20. The transfer point between transfer device 70 and robotic device 20 in the area of the second end G₂ of the guidances 72.1, 72.2 is the second transfer point 78. Robotic device 20 removes a rod-like element R with sausage-shaped products S stored thereon, from second transfer point 78, and inserts said rod-like element into a storage frame 30.

For the movement of the rod-like element R from the first transfer point 76 to the second transfer point 78, at least one gripping unit 80 is used. According to the shown embodiment, two gripping units 80 are provided, each gripping unit 80 is linearly moveable along the correspondence guidance 72.1, 72.2 via a transmission device 84, which, amongst others, may include sprocket wheels, chains and drive elements, like a servo motor.

For controlling the movement of gripping units 80, transfer device 70 is provided with a control unit CU.

Each gripping unit 80 comprises an engaging part 90 being vertically movable relative to the corresponding guidance 72. The vertical direction is indicated with arrow V in Figs. 2 and 3. Due to the possible vertical movement, rod-like element R can be engaged and gripped or picked-up by each gripping unit 80. In particular, engaging part 90 has a recess 92 for accommodating a rod-like element R. The rod-like element R is gripped by the respective recess 92 of gripping units 80 in the section of the first and second end E₁, E₂.

The shown recess 92 has a part circular shape that corresponds to the circular cross-section of the gripped rod-like element R. But, the cross-section of the rod-like element R can also be e.g. triangular or rectangular (not shown). To adapt gripping unit 80 to the corresponding cross-section of the rod-like element R, engaging part 90 with recess 92 is replaceable.

Each gripping unit 80 is moveable between the second transfer point 78 for the robotic device 20 and a third transfer point 86. Third transfer point 86 is defined by the position of gripping units 80 as shown in Fig. 3. This is (according to Fig. 3) the leftmost position of gripping units 80, or the position closest to first ends G₁ of guidances 72.1, 72.2.

For moving the rod-like elements R from the first transfer point 76 to the third transfer point 86, two sliders 100 are provided being polygonal and plate-like. Each slider 100 is linearly movable along the corresponding guidance 72.

Each slider 100 comprises on its right end (according to Fig. 2) a hook 106 being able to engage and pull rod-like element R. In particular, sliders 100 engage the rod-like elements R in the section of the first end E₁ and the second end E₂, respectively.

As can be seen in Figs. 2 and 3, second transfer point 78 is defined by a pair of first and second depressions D₁, D₂, with each depression D₁, D₂ arranged on one of guidances 72.1, 72.2 in the region of their second end G₂. Also third transfer point 86 is formed by a pair of depressions D₁, D₂, each on one of guidances 72.1, 72.2. Said depressions D₁, D₂ prevent a rod-like element R from unintentionally moving out of these positions, e.g. by a possible pendulous movement of the sausage-shaped products S suspended on said rod-like element R.

As further can be seen in Figs. 2 and 3, between the second and third transfer points 78, 86, further depressions D₁, D₂ are arranged on guidances 72.1, 72.2. In particular, ten depressions D₁, D₂ are arranged pairwise with depressions D₁ opposite to depressions D₂ in a line at least approximately perpendicular to transfer direction T. Said pairs of depressions D₁, D₂ form five buffering positions BP of a buffering region BR on guidances 72.1, 72.2, in the region of their second ends G₂. Depending on the length of guidances 72.1, 72.2, more than five buffering positions BP may be provided. Naturally, it is also possible to provide less than five buffering positions BP, like a single buffering position BP or two.

Also depressions D₁, D₂ which form buffering positions BP of buffering region BR, have a shape corresponding to the cross-sectional shape of the rod-like elements R to be treated. In the embodiment of Figs. 2 and 3, depressions D₁, D₂ have a part circular shape that corresponds to the circular cross-section of rod-like elements R.

Depressions D₁, D₂ are generally provided in the upper surface of guidances 72.1, 72.2. In the embodiment of Figs. 2 and 3, a bar 72a is arranged on top guidances 72.1, 72.2 to form the upper surface of said guidances 72.1, 72.2. Accordingly, depressions D₁, D₂ are formed in bar 72a.

Bars 72a may be provided as replacement parts, e.g. in case of abrasion, or to be replaced by bars having depressions of different shape, in adaption to rod-like elements R having a corresponding different cross-sectional shape.

In production line 10 sausage-shaped products S are produced by filling e.g. sausage meat through a filling pipe into a tubular casing and closing the casing by a clipping machine attaching and closing clips at both ends. A flexible suspension loop is fed to one of the closing clips to be attached together with said clip to the respective end of the sausage-shaped products S. Thereafter, sausage-shaped products S are placed in regular intervals on a rod-like element R in automatic hanging line 16.

For discharging rod-like elements R with sausage-shaped products S thereon, sliders 100 are moved to the first end G₁ of guidances 72.1, 72.2, that means to the right side (according to Fig. 2). By moving sliders 100 towards the first end G₁ of guidances 72.1, 72.2, hooks provided at the ends of sliders 100 engage the rod-like element R in the first transfer point 76.

Afterwards, sliders 100 are moved in transfer direction T towards the second end G₂ of guidances 72.1, 72.2 (which is the left side according to Fig. 2), whereby the gripped rod-like element R with the stored sausages S is moved away from production line 10. In the third transfer point 86, the rod-like element R is released from sliders 100 and gripped by gripping units 80.

To grip rod-like element R, gripping units 80 are moved thereto, or they are already positioned in third transfer point 78. Engaging parts 90 of gripping units 80 are moved from a lifted position into a lowered position in which engaging parts 90 engage first and second ends E₁, E₂ of rod-like element R.

Thereafter, gripping units 80 are moved in transfer direction T towards second end G₂ of guidances 72.1, 72.2, and rod-like element R is positioned in one of buffering positions BP in buffering region BR.

Depending on the filling degree of buffering region BR and whether a smoking rod R is positioned in second transfer position 78, the rod-like element R in the front most buffering position BP is moved into the second transfer position 78 when empty. Alternatively, in the case that the front most buffering position BP is empty, a rod-like element R from one of the subsequent buffering positions may be moved into the front most buffering position BP.

After positioning a rod-like element R in the second transfer position 78, robotic device may remove said rod-like element R and insert said rod-like element R into storage frame 30.

In the case of a continuous production of sausage-shaped products S, rod-like elements R filled with sausage-shaped products S, may be removed from hanging line 16 in regular intervals. Accordingly, after a predefined number of rod-like elements R are positioned in buffering region BR, robotic device 20 may remove said rod-like elements R in said regular intervals, whereby the filing degree of buffering region BR remains substantially constant.

During irregularities in the production process, the number of rod-like elements R filled with sausage-shaped products S by hanging line 16 may decrease. Due to the number of rod-like elements R in buffering region BR, robotic device 20 may continuously remove rod-like elements R from buffering region BR, at least in a defined extend. The delay in production may be balanced during the next exchange of a filled storage frame 30, or by an at least temporary increased production rate of production line 10, if possible.

For ensuring that at each time, a rod-like element R is positioned in the second transfer point 78, or at least in the front most buffering position BP, the movement of gripping units 80 is controlled accordingly, by control unit CU. It is also possible that transfer device 70, in case that it is not provided with an own control unit, is controlled by the control unit 12 of production line 10 or by the control unit 22 of robotic device 22.

A control program included in control unit CU may control the movement of gripping units 80 such that the rod-like elements R in the buffering region BR are subsequently moved towards the second transfer point 78.

Moreover, the control unit CU of transfer device 70 may be programmed such that a rod-like element R is moved into second transfer position 78 immediately after robotic device 20 has removed a rod-like element R therefrom, to ensure that at each time, a rod-like element is in the second transfer position 78.

Accordingly, the control unit CU of transfer device 70 may be programmed such that a rod-like element R positioned in the first transfer point 76 is removed therefrom immediately after being positioned in the first transfer point 76, to ensure that a rod-like element R filled with sausage-shaped products S by hanging line 16 may be removed from hanging line 16 without any delay, to guarantee a continuous production process.

Additionally, the control unit CU of transfer device 70 may be programmed such that the rod-like elements R in the buffering region BR are moved from one buffering position BP to a next buffering position BP in transfer direction T, such that the length of the movement path of the gripping units 80 is optimized. An aim of an optimization may be the shortest possible movement path, the shortest possible operation time, or an optimal distribution of the rod-like elements R in the buffering region BR to ensure an efficient transport of the rod-like elements R from or to one of the first, second or third transfer position 76, 78, 86. The control unit CU may provide specific movement pattern for the gripping units 80.

Sensors may be provided along the guidances 72.1, 72.2 for estimating the positions of the rod-like elements R positioned thereon. Based on the sensor data, the control unit CU of the transfer device 70 may control the movement of gripping units 80, in accordance with the desired result.

Alternatively, or additionally, also gripping units 80 may be provided with sensors or counters, for estimating the number and position of the rod-like elements R just moved, in order to be able to compute the next operation, in accordance with the desired result.

Depressions D₁, D₂ are provided in the upper surface of guidances 72.1, 72.2 on which rod-like elements R slide while being moved from the first transfer point 76 towards the second transfer point 78.

In the embodiment according to Figs. 2 and 3, rod-like elements R have a circular cross-sectional shape. Accordingly, depressions D₁, D₂ have a corresponding part circular shape, the diameter of which matches the diameter of the cross-section of rod-like elements R.

Rod-like elements R may also have other than a circular cross-section, like a triangular or rectangular cross-section. Accordingly, also depressions D₁, D₂ have a matching cross-section. Depressions D₁, D₂ may be formed as rectangular depressions. To enable a rod-like element R with a triangular or rectangular cross-section to be moved into and out of said depression, depressions D₁, D₂ may therefore be provided with lead-in chamfers and lead-out chamfers.

## Claims

1. A transfer device (70) for transferring rod-like elements (R) for storing sausage-shaped products (S), in particular sausages, in a transfer direction (T) from a first transfer point (76) to a second transfer point (78), comprising:
a first guidance (72.1) and a second guidance (72.2) spaced apart and extending at least substantially parallel to each other, each having a first end (G₁) and a second end (G₂), wherein, in the area of the first end (G₁) of the guidances (72.1, 72.2), the first transfer point (76) is defined and, in the area of the second end (G₂) of the guidances (72.1, 72.2), the second transfer point (78) is defined, a buffering region (BR) provided between the first transfer point (76) and the second transfer point (78) of the guidances (72.1, 72.2) for temporarily buffering at least one rod-like element (R) after being removed from the first transfer point (76),
wherein at least one, preferably a pair of gripping units (80) is provided with the gripping unit (80) being linearly movable along at least one of the guidances (72.1, 72.2), for transferring a rod-like element (R) along said guidance (72.1, 72.2) from the first transfer point (76) to the buffering region (BR) and/or to the second transfer point (78); and
wherein a control unit (CU) is provided being configured to control the at least one gripping unit (80), **characterized in that** the buffering region (BR) includes several predetermined buffering positions (BP) and **in that** the control unit (CU) is adapted to move the at least one gripping unit (80) in specific movement pattern for moving the rod-like elements (R) positioned in the buffering region (BR) towards the second transfer point (78) according to said specific pattern.

2. The transfer device (70) according to claim 1,
wherein several predetermined buffering positions (BP) are arranged at substantially equal distances from each other in the transfer direction (T).

3. The transfer device (70) according to claim 1 or 2,
wherein the predetermined buffering positions (BP) are located closer to the second transfer point (78) than to the first transfer point (76) with respect to the transfer direction (T).

4. The transfer device (70) according to any of claims 1 to 3,
wherein the predetermined buffering positions (BP) are formed by at least one first depression (D₁) in the upper surface of the first guidance (72.1) and wherein preferably a corresponding second depression (D₂) is provided on the upper surface of the second guidance (72.2).

5. The transfer device (70) according to claim 4,
wherein the depression (D₁, D₂) has a cross-sectional shape corresponding to the cross-sectional shape of the rod-like elements (R) used.

6. The transfer device (70) according to any of claims 1 to 5,
wherein each of the guidances (72.1, 72.2) includes a bar (72a) extending along the upper surface of the guidances (72.1, 72.2) and wherein preferably the bar (72a) includes the at least one depression (D₁, D₂).

7. The transfer device (70) according to claim 1,
wherein the control unit (CU) is configured to control the at least one gripping unit (80) such that a rod-shaped element (R) located in the first transfer point (76) is removed from the first transfer point (76) before rod-shaped elements (R) located in the buffering region (BR) are moved by the at least one gripping unit (80).

8. The transfer device (70) according to claim 1 or 7, the control unit (CU) being configured to control the at least one gripping unit (80) such that a rod-shaped element (R) located in preferably the foremost predetermined buffering position (BP) of the buffering region (BR), referred to the transfer direction (T), is transferred to the second transfer point (78) before other rod-shaped elements (R) located in the buffering region (BR) are moved by the at least one gripping unit (80).

9. A method for transferring rod-like elements (R) for storing sausage-shaped products (S), in particular sausages, in a transfer device comprising a first transfer point (76), a second transfer point (78), a buffering region (BR) located between the first transfer point (76) and the second transfer point (78), the buffering region (BR) including several predetermined buffering positions (BP), at least one gripping unit (80) for transferring a rod-like element (R) in a transfer direction (T) from the first transfer point (76) to the buffering region (BR) and/or the second transfer point (78), and a control unit (CU) for controlling the at least one gripping unit (80), comprising the steps of:
picking-up a rod-shaped element (R) at the first transfer point (76) by the gripping unit (80) and transferring said rod-like element (R) to the second transfer point (78) if there is no rod-like element (R) at the second transfer point (78), or moving the rod-shaped element (R) to the buffering region (BR) if there is a rod-like element (R) at the second transfer point (78),
moving the gripping unit (80) in specific movement pattern, and moving the rod-like elements (R) positioned in the buffering region (BR) towards the second transfer point (78) according to said specific pattern.

10. The method according to claim 9, wherein the plurality of predetermined buffering positions (BP) are arranged in series and spaced apart in the transfer direction (T), comprising the step of:
moving a rod-shaped element (R) picked-up at the first transfer point (76) into the foremost free predetermined buffering position (BP) with respect to the transfer direction (T).

11. The method according to claim 10, comprising the step of:
placing several rod-shaped elements (R) in the predetermined buffering positions (BP) of the buffering region (BR) in such a way that the foremost predetermined buffering position (BP), referred to the transfer direction (T), is occupied first by a rod-shaped element (R) and subsequently the predetermined buffering positions (BP) upstream the foremost buffering position (BP), referred to the transfer direction (T), are successively occupied by rod-shaped elements (R) in the transfer direction (T).

12. The method according to any of the claims 9 to 11, wherein the plurality of predetermined buffering positions (BP) are arranged in series and spaced apart in the transfer direction (T), comprising the step of: removing a rod-shaped element (R) from the first transfer point (76) before moving one of the rod-shaped elements (R) located in the buffering region (BR).

13. The method according to any of the claims 9 to 12, wherein the plurality of predetermined buffering positions (BP) are arranged in series and spaced apart in the transfer direction (T), comprising the step of:
transferring a rod-shaped element (R) from the buffering region (BR) to the second transfer point (78) before moving rod-shaped elements located in the buffering region (BR).

## Patentansprüche

1. Überführungsvorrichtung (70) zum Überführen von stabförmigen Elementen (R) zur Lagerung von wurstförmigen Produkten (S), insbesondere Würsten, in einer Überführungsrichtung (T) von einem ersten Überführungspunkt (76) zu einem zweiten Überführungspunkt (78), umfassend:
eine erste Führung (72.1) und eine zweite Führung (72.2), die voneinander beabstandet sind und sich wenigstens im Wesentlichen parallel zueinander erstrecken und jeweils ein erstes Ende (G₁) und ein zweites Ende (G₂) aufweisen, wobei im Bereich des ersten Endes (G₁) der Führungen (72.1, 72.2) der erste Überführungspunkt (76) definiert ist und im Bereich des zweiten Endes (G₂) der Führungen (72.1, 72.2) der zweite Überführungspunkt (78) definiert ist,
eine Pufferregion (BR), die zwischen dem ersten Überführungspunkt (76) und dem zweiten Überführungspunkt (78) der Führungen (72.1, 72.2) vorgesehen ist, um wenigstens ein stabförmiges Element (R) vorübergehend zu puffern, nachdem es aus dem ersten Überführungspunkt (76) entnommen wurde,
wobei wenigstens eine Greifeinheit (80), vorzugsweise ein Paar von Greifeinheiten (80), vorgesehen ist, wobei die Greifeinheit (80) entlang wenigstens einer der Führungen (72.1, 72.2) linear bewegbar ist, um ein stabförmiges Element (R) entlang der Führung (72.1, 72.2) von dem ersten Überführungspunkt (76) zu der Pufferregion (BR) und/oder zu dem zweiten Überführungspunkt (78) zu überführen; und
wobei eine Steuereinheit (CU) vorgesehen ist, die dazu konfiguriert ist, die wenigstens eine Greifeinheit (80) zu steuern,
**dadurch gekennzeichnet, dass** die Pufferregion (BR) mehrere vorbestimmte Pufferpositionen (BP) umfasst und dass die Steuereinheit (CU) dazu eingerichtet ist, die wenigstens eine Greifeinheit (80) in einem spezifischen Bewegungsmuster zu bewegen, um die in der Pufferregion (BR) positionierten stabförmigen Elemente (R) in Richtung zu dem zweiten Überführungspunkt (78) gemäß dem spezifischen Muster zu bewegen.

2. Überführungsvorrichtung (70) nach Anspruch 1,
wobei mehrere vorbestimmte Pufferpositionen (BP) in der Überführungsrichtung (T) in im wesentlichen gleichen Abständen zueinander angeordnet sind.

3. Überführungsvorrichtung (70) nach Anspruch 1 oder 2,
wobei die vorbestimmten Pufferpositionen (BP) in Bezug auf die Überführungsrichtung (T) näher am zweiten Überführungspunkt (78) als am ersten Überführungspunkt (76) angeordnet sind.

4. Überführungsvorrichtung (70) nach einem der Ansprüche 1 bis 3,
wobei die vorbestimmten Pufferpositionen (BP) durch wenigstens eine erste Vertiefung (D₁) in der oberen Fläche der ersten Führung (72.1) gebildet werden und wobei vorzugsweise eine entsprechende zweite Vertiefung (D₂) auf der oberen Fläche der zweiten Führung (72.2) vorgesehen ist.

5. Überführungsvorrichtung (70) nach Anspruch 4,
wobei die Vertiefung (D₁, D₂) eine Querschnittsform aufweist, die der Querschnittsform der verwendeten stabförmigen Elemente (R) entspricht.

6. Überführungsvorrichtung (70) nach einem der Ansprüche 1 bis 5,
wobei jede der Führungen (72.1, 72.2) eine Stange (72a) aufweist, die sich entlang der oberen Fläche der Führungen (72.1, 72.2) erstreckt, und wobei die Stange (72a) vorzugsweise die wenigstens eine Vertiefung (D₁, D₂) aufweist.

7. Überführungsvorrichtung (70) nach Anspruch 1,
wobei die Steuereinheit (CU) dazu konfiguriert ist, die wenigstens eine Greifeinheit (80) so zu steuern, dass ein stabförmiges Element (R), das sich an dem ersten Überführungspunkt (76) befindet, aus dem ersten Überführungspunkt (76) entnommen wird, bevor stabförmige Elemente (R), die sich in der Pufferregion (BR) befinden, von der wenigstens einen Greifeinheit (80) bewegt werden.

8. Überführungsvorrichtung (70) nach Anspruch 1 oder 7,
wobei die Steuereinheit (CU) dazu konfiguriert ist, die wenigstens eine Greifeinheit (80) so zu steuern, dass ein stabförmiges Element (R), das sich bezogen auf die Überführungsrichtung (T) vorzugsweise in der vordersten vorbestimmten Pufferposition (BP) der Pufferregion (BR) befindet, zu dem zweiten Überführungspunkt (78) überführt wird, bevor andere stabförmige Elemente (R), die sich in der Pufferregion (BR) befinden, von der wenigstens einen Greifeinheit (80) bewegt werden.

9. Verfahren zum Überführen von stabförmigen Elementen (R) zur Lagerung von wurstförmigen Produkten (S), insbesondere Würsten, in einer Überführungsvorrichtung umfassend einen ersten Überführungspunkt (76), einen zweiten Überführungspunkt (78), eine Pufferregion (BR), die zwischen dem ersten Überführungspunkt (76) und dem zweiten Überführungspunkt (78) liegt, wobei die Pufferregion (BR) mehrere vorbestimmte Pufferpositionen (BP) enthält, wenigstens eine Greifeinheit (80) zum Überführen eines stabförmigen Elements (R) in einer Überführungsrichtung (T) von dem ersten Überführungspunkt (76) zu der Pufferregion (BR) und/oder dem zweiten Überführungspunkt (78), und eine Steuereinheit (CU) zum Steuern der wenigstens einen Greifeinheit (80), wobei das Verfahren die Schritte umfasst:
Aufnehmen eines stabförmigen Elements (R) am ersten Überführungspunkt (76) durch die Greifeinheit (80) und Überführen des stabförmigen Elements (R) zum zweiten Überführungspunkt (78), wenn am zweiten Überführungspunkt (78) kein stabförmiges Element (R) vorhanden ist, oder Bewegen des stabförmigen Elements (R) zur Pufferregion (BR), wenn am zweiten Überführungspunkt (78) ein stabförmiges Element (R) vorhanden ist,
Bewegen der Greifeinheit (80) in einem spezifischen Bewegungsmuster, und Bewegen der in der Pufferregion (BR) positionierten stabförmigen Elemente (R) in Richtung zu dem zweiten Überführungspunkt (78) gemäß dem spezifischen Muster.

10. Verfahren nach Anspruch 9, wobei die Pufferregion (DR) mehrere vorbestimmte Pufferpositionen (BP) aufweist, die in der Überführungsrichtung (T) in Reihe angeordnet und voneinander beabstandet sind, den Schritt umfassend:
Bewegen eines stabförmigen Elements (R), das am ersten Überführungspunkt (76) aufgenommen wurde, in die in Bezug auf die Überführungsrichtung (T) vorderste freie vorbestimmte Pufferposition (BP).

11. Verfahren nach Anspruch 10, das den Schritt umfasst:
Platzieren mehrerer stabförmiger Elemente (R) in den vorbestimmten Pufferpositionen (BP) der Pufferregion (BR) in der Weise, dass die in Bezug auf die Überführungsrichtung (T) vorderste vorbestimmte Pufferposition (BP) zuerst von einem stabförmigen Element (R) besetzt wird und anschließend die in Bezug auf die Überführungsrichtung (T) vorgelagerten vorbestimmten Pufferpositionen (BP) nacheinander von stabförmigen Elementen (R) in der Überführungsrichtung (T) besetzt werden.

12. Verfahren nach einem der Ansprüche 9 bis 11, wobei die mehreren vorbestimmten Pufferpositionen (BP) in Reihe angeordnet und in der Überführungsrichtung (T) voneinander beabstandet sind, den Schritt umfassend:
Entnehmen eines stabförmigen Elements (R) aus dem ersten Überführungspunkt (76), bevor eines der stabförmigen Elemente (R), die sich in der Pufferregion (BR) befinden, bewegt wird.

13. Verfahren nach einem der Ansprüche 9 bis 12, wobei die mehreren vorbestimmten Pufferpositionen (BP) in Reihe angeordnet und in der Überführungsrichtung (T) voneinander beabstandet sind, den Schritt umfassend:
Überführen eines stabförmigen Elements (R) aus der Pufferregion (BR) zu dem zweiten Überführungspunkt (78), bevor stabförmige Elemente, die sich in der Pufferregion (BR) befinden, bewegt werden.

## Revendications

1. Dispositif de transfert (70) destiné à transférer des éléments en forme de tige (R) pour le stockage de produits en forme de saucisse (S), en particulier des saucisses, dans un sens de transfert (T) à partir d'un premier point de transfert (76) à un second point de transfert (78), comprenant : un premier dispositif de guidage (72.1) et un second dispositif de guidage (72.2) écartés et s'étendant au moins sensiblement parallèlement l'un à l'autre, chacun présentant une première extrémité (G₁) et une seconde extrémité (G₂), où, dans la zone de la première extrémité (G₁) des dispositifs de guidage (72.1, 72.2), le premier point de transfert (76) est défini et, dans la zone de la seconde extrémité (G₂) des dispositifs de guidage (72.1, 72.2), le second point de transfert (78) est défini,
une région tampon (BR) disposée entre le premier point de transfert (76) et le second point de transfert (78) des dispositifs de guidage (72.1, 72.2), destinée à stocker temporairement au moins un élément en forme de tige (R) après son retrait du premier point de transfert (76),
au moins une unité, de préférence une paire d'unités, de préhension (80) étant pourvue de l'unité de préhension (80) pouvant se déplacer linéairement le long d'au moins l'un des dispositifs de guidage (72.1, 72.2), afin de transférer un élément en forme de tige (R) le long dudit dispositif de guidage (72.1, 72.2) à partir du premier point de transfert (76) à la région tampon (BR) et/ou au second point de transfert (78) ; et
une unité de commande (CU) étant présente, configurée pour commander ladite au moins une unité de préhension (80), **caractérisé en ce que** la région tampon (BR) comprend plusieurs positions tampon (BP) prédéterminées et **en ce que** l'unité de commande (CU) est configurée pour déplacer ladite au moins une unité de préhension (80) dans un motif de déplacement spécifique afin de déplacer les éléments en forme de tige (R) positionnés dans la région tampon (BR) vers le second point de transfert (78) selon ledit motif spécifique.

2. Dispositif de transfert (70) selon la revendication 1,
plusieurs positions tampon (BP) prédéterminées étant agencées à des distances sensiblement égales les unes des autres dans le sens de transfert (T).

3. Dispositif de transfert (70) selon la revendication 1 ou 2,
les positions tampon (BP) prédéterminées étant situées plus près du second point de transfert (78) que du premier point de transfert (76) par rapport au sens de transfert (T).

4. Dispositif de transfert (70) selon l'une quelconque des revendications 1 à 3,
les positions tampon (BP) prédéterminées étant formées par au moins un premier creux (D₁) dans la surface supérieure du premier dispositif de guidage (72.1) et de préférence un second creux (D₂) correspondant étant disposé sur la surface supérieure du second dispositif de guidage (72.2).

5. Dispositif de transfert (70) selon la revendication 4,
le creux (D₁, D₂) présentant une forme de section transversale correspondant à la forme de section transversale des éléments en forme de tige (R) utilisés.

6. Dispositif de transfert (70) selon l'une quelconque des revendications 1 à 5,
chacun des dispositifs de guidage (72.1, 72.2) comprenant une barre (72a) s'étendant le long de la surface supérieure des dispositifs de guidage (72.1, 72.2) et de préférence la barre (72a) comprenant ledit au moins un creux (D₁, D₂).

7. Dispositif de transfert (70) selon la revendication 1,
l'unité de commande (CU) étant configurée pour commander ladite au moins une unité de préhension (80) de telle sorte qu'un élément en forme de tige (R) situé au premier point de transfert (76) est retiré du premier point de transfert (76) avant que des éléments en forme de tige (R) situés dans la région tampon (BR) soient déplacés par ladite au moins une unité de préhension (80).

8. Dispositif de transfert (70) selon la revendication 1 ou 7,
l'unité de commande (CU) étant configurée pour commander ladite au moins une unité de préhension (80) de telle sorte qu'un élément en forme de tige (R) situé de préférence dans la position tampon (BP) prédéterminée la plus en avant de la région tampon (BR), par rapport au sens de transfert (T), est transféré au second point de transfert (78) avant que d'autres éléments en forme de tige (R) situés dans la région tampon (BR) soient déplacés par ladite au moins une unité de préhension (80).

9. Procédé de transfert d'éléments en forme de tige (R) pour le stockage de produits en forme de saucisse (S), en particulier des saucisses, dans un dispositif de transfert comprenant un premier point de transfert (76), un second point de transfert (78), une région tampon (BR) située entre le premier point de transfert (76) et le second point de transfert (78), la région tampon (BR) comprenant plusieurs positions tampon (BP) prédéterminées, au moins une unité de préhension (80) destinée à transférer un élément en forme de tige (R) dans un sens de transfert (T) à partir du premier point de transfert (76) à la région tampon (BR) et/ou au second point de transfert (78) et une unité de commande (CU) destinée à commander ladite au moins une unité de préhension (80), comprenant les étapes de :
ramassage d'un élément en forme de tige (R) au niveau du premier point de transfert (76) par l'unité de préhension (80) et transfert dudit élément en forme de tige (R) au second point de transfert (78) s'il n'y a pas d'élément en forme de tige (R) au niveau du second point de transfert (78) ou déplacement de l'élément en forme de tige (R) à la région tampon (BR) s'il y a un élément en forme de tige (R) au niveau du second point de transfert (78),
déplacement de l'unité de préhension (80) dans un motif de déplacement spécifique et déplacement des éléments en forme de tige (R) positionnés dans la région tampon (BR) vers le second point de transfert (78) selon ledit motif spécifique.

10. Procédé selon la revendication 9, la pluralité de positions tampon (BP) prédéterminées étant agencées en série et écartées dans le sens de transfert (T), comprenant l'étape de :
déplacement d'un élément en forme de tige (R) ramassé au niveau du premier point de transfert (76) dans la position tampon (BP) prédéterminée libre la plus en avant par rapport au sens de transfert (T).

11. Procédé selon la revendication 10, comprenant l'étape de :
placement de plusieurs éléments en forme de tige (R) dans les positions tampon (BP) prédéterminées de la région tampon (BR) de telle sorte que la position tampon (BP) prédéterminée la plus en avant, par rapport au sens de transfert (T), est occupée en premier par un élément en forme de tige (R) et ensuite les positions tampon (BP) prédéterminées en amont de la position tampon (BP) la plus en avant, par rapport au sens de transfert (T), sont successivement occupées par des éléments en forme de tige (R) dans le sens de transfert (T).

12. Procédé selon l'une quelconque des revendications 9 à 11, la pluralité de positions tampon (BP) prédéterminées étant agencées en série et écartées dans le sens de transfert (T), comprenant l'étape de : retrait d'un élément en forme de tige (R) du premier point de transfert (76) avant le déplacement de l'un des éléments en forme de tige (R) situés dans la région tampon (BR).

13. Procédé selon l'une quelconque des revendications 9 à 12, la pluralité de positions tampon (BP) prédéterminées étant agencées en série et écartées dans le sens de transfert (T), comprenant l'étape de : transfert d'un élément en forme de tige (R) à partir de la région tampon (BR) au second point de transfert (78) avant le déplacement des éléments en forme de tige situés dans la région tampon (BR).
